Europäisches Patentamt

European Patent Office

Office européen des brevets

(11) Veröffentlichungsnummer: **0 416 168 A2**

## (12) EUROPÄISCHE PATENTANMELDUNG

(21) Anmeldenummer: 89119477.1

(22) Anmeldetag: 20.10.89

(51) Int. Cl.5: **B29C 53/12**, A41C 5/00

(30) Priorität: 08.09.89 DE 3929930

(43) Veröffentlichungstag der Anmeldung:
13.03.91 Patentblatt 91/11

(84) Benannte Vertragsstaaten:
AT BE CH DE ES FR GB GR IT LI NL SE

(71) Anmelder: Dijkman, Henk, sen.
Focher Strasse 179
W-5650 Solingen 19(DE)

Anmelder: Dijkman, Henk, jun.
Focher Strasse 179
W-5650 Solingen 19(DE)

(72) Erfinder: Dijkman, Henk, sen.
Focher Strasse 179
W-5650 Solingen 19(DE)
Erfinder: Dijkman, Henk, jun.
Focher Strasse 179
W-5650 Solingen 19(DE)

(74) Vertreter: Patentanwälte Dipl.-Ing. Alex
Stenger Dipl.-Ing. Wolfram Watzke Dipl.-Ing.
Heinz J. Ring
Kaiser-Friedrich-Ring 70
W-4000 Düsseldorf 11(DE)

(54) Verfahren und Vorrichtung zum Herstellen von gekrümmten Kunststoffbügeln, insbesondere Büstenhalterbügeln.

(57) Eine Vorrichtung zum Herstellen von gekrümmten Kunststoffbügeln 1, insbesondere Büstenhalterbügeln, besteht aus einem Wickelkern 8, welcher einen endlosen, thermoplastisch verformbaren Kunststoffdraht 3 im warmen Zustand aufwickelt. Durch eine gleichzeitige Abkühlung erstarrt der Kunststoffdraht 3, so daß eine Wendel 15 gebildet wird, welche aus mehreren Windungen besteht. Diese Wendel 15 kann von einer Walze 14 aufgenommen werden, die stirnseitig am Wickelkern 8 angeordnet ist. Nach Abnehmen dieser Wendel 15 von der Walze 14 können die Windungen zur Bildung der einzelnen Kunststoffbügel 1 entsprechend aufgeschnitten werden.

Fig. 2

EP 0 416 168 A2

Xerox Copy Centre

## VERFAHREN UND VORRICHTUNG ZUM HERSTELLEN VON GEKRÜMMTEN KUNSTSTOFFBÜGELN, INSBE-SONDERE BÜSTENHALTERBÜGELN

Die Erfindung betrifft ein Verfahren zum Herstellen von gekrümmten Kunststoffbügeln, insbesondere Büstenhalterbügeln, bei dem diese unter Verwendung von erwärmtem Kunststoff in die vorgegebene Form gebracht und anschließend zum Erstarren abgekühlt werden; die Erfindung betrifft ferner eine Vorrichtung zum Herstellen von gekrümmten Kunststoffbügeln, insbesondere Büstenhalterbügeln.

Zur Herstellung von gekrümmten Kunststoffbügeln in Form von Büstenhalterbügeln ist es bekannt, hierfür Spritzformen vorzusehen, in die erwärmter Kunststoff eingespritzt wird, um ihn anschließend zum Erstarren abzukühlen. Nach Öffnen der Spritzform kann dann der so gebildete fertige Bügel entnommen werden. Dieses Herstellungsverfahren unter Verwendung von Spritzformen ist umständlich und zeitaufwendig, da damit nur eine geringe Ausstoßrate an Kunststoffbügeln erzielt werden kann.

Ein weiteres Herstellungsverfahren sieht die Ummantelung eines Stahldrahtes unter Verwendung einer Kaltverformung vor, was ebenfalls umständlich ist und zu einer unbefriedigenden Ausstoßrate führt.

Davon ausgehend liegt der Erfindung die **Aufgabe** zugrunde, ein einfaches Verfahren zum Herstellen von gekrümmten Kunststoffbügeln, insbesondere Büstenhalterbügeln, mit einer hohen Ausstoßrate zu schaffen; weiterhin soll eine Vorrichtung zum entsprechenden Herstellen von derartigen Bügeln geschaffen werden.

Als technische **Lösung** wird mit der Erfindung verfahrensmäßig vorgeschlagen, daß ein endloser, thermoplastischer Kunststoffdraht im thermoplastisch verformbaren Zustand kontinuierlich in der Art einer Wendel gewickelt und dabei abgekühlt wird und daß anschließend die Windungen der so gebildeten, erstarrten Wendel zur Bildung einzelner, gekrümmter Kunststoffbügel aufgeschnitten werden.

Auf diese Weise ist ein Endlosverfahren zum Herstellen von gekrümmten Kunststoffbügeln, insbesondere zum Herstellen von gekrümmten Büstenhalterbügeln geschaffen. Der Kunststoffdraht wird dabei im warmen Zustand, also in demjenigen Zustand, in dem er thermoplastisch verformt werden kann, wendelförmig gewickelt. Die Querschnittsform der Wendel ist dabei an die Krümmung des späteren Kunststoffbügels angepaßt. In der Regel wird die Querschnittsform der Wendel exzentrisch, beispielsweise oval sein. Sofern die Kunststoffbügel teilkreisförmig gekrümmt sind, ist die Querschnittsform der Wendel ein Kreis. Auf diese Weise ist eine aufgrund der Federelastizität des Kunststoffdrahtes elastische Wendel geschaffen, aus der dann durch Aufschneiden der Windungen die einzelnen Kunststoffbügel hergestellt werden, indem beispielsweise auf zwei einander gegenüberliegenden Seiten die Wendel parallel zu deren Achse aufgeschnitten wird, so daß sich dann automatisch die Kunststoffbügel ergeben. Somit ist ein wirtschaftliches Herstellungsverfahren für gekrümmte Kunststoffbügel geschaffen, welches eine hohe Ausstoßrate gewährleistet.

Vorzugsweise wird der endlose Kunststoffdraht direkt aus einem der Herstellung des Kunststoffdrahtes dienenden Extruder abgezogen, so daß dieser im stark erwärmten Herstellungszustand weiterverarbeitet wird, so daß ein kontinuierlich ablaufender Herstellungsprozeß möglich ist.

Um den Kunststoffdraht zur Bildung der Wendel abzukühlen, wird diese vorzugsweise mit Wasser besprüht.

In einer bevorzugten Weiterbildung werden als endloser Kunststoffdraht wenigstens ein Kunststoffdrahtkern, vorzugsweise zwei Kunststoffdrahtkerne verwendet, die von einer Kunststoffumhüllung ummantelt werden. Der Kunststoffdrahtkern bzw. die Kunststoffdrahtkerne bilden somit das Trägermaterial für die Kunststoffumhüllung. Ein derartiger Kunststoffdraht läßt sich auf technisch einfache Weise in einem Extruder herstellen, indem der Kunststoffdrahtkern bzw. die Kunststoffdrahtkerne dem Extruder zugeführt werden und dieser dann die Ummantelung mit der Kunststoffumhüllung vornimmt. Durch eine entsprechende Auswahl der verwendeten Materialien können dabei die gewünschten Drahteigenschaften geschaffen werden.

Vorzugsweise wird als Kunststoffdrahtkern Polyester verwendet. Derartige Polyestermonofile eignen sich insbesondere für Kunststoffbügel mit einem hohen Rückstellvermögen und damit mit einer hohen Federkraft.

Bei der Verwendung von zwei Kunststoffdrahtkernen wird der auf der Krümmungsaußenseite verlaufende Kunststoffdrahtkern vorzugsweise dicker als der Kunststoffdrahtkern auf der Krümmungsinnenseite ausgebildet. So kann der Durchmesser des äußeren Kunststoffdrahtkernes ungefähr 1,2 mm und der Kunststoffdrahtkern auf der Krümmungsinnenseite ungefähr 0,7 mm betragen, so daß man insgesamt einen Kunststoffdraht mit einem Querschnitt von circa 3 x 2 mm erhält.

Als Kunststoffumhüllung wird vorzugsweise Polyacetalharz oder Polykarbonat verwendet. Das Polykarbonat ist im Handel unter dem Warenzeichen "Makrolon" bekannt. Mit den zuvor erwähnten Materialien ist somit ein Kunststoffbügel mit einem sehr großen Rückstellvermögen geschaffen.

Die technische **Lösung** ist vorrichtungsmäßig gekennzeichnet durch einen um eine Achse rotierenden Wickelkern, dessen mit einem an die Krümmungsform der herzustellenden Kunststoffbügel angepaßten Umfangsprofil versehene Mantelfläche einen endlosen, thermoplastischen Kunststoffdraht im thermoplastisch verformbaren Zustand aufwickelt sowie durch eine dem Wickelkern zugeordnete Kühleinrichtung zum Abkühlen des Kunststoffdrahtes während des Aufwickelns zum Überführen des Kunststoffdrahtes in eine erstarrte Wendel, deren Windungen anschließend zur Bildung der einzelnen, gekrümmten Kunststoffbügel aufschneidbar sind.

Auf diese Weise ist eine technisch einfache Vorrichtung zum Herstellen von gekrümmten Kunststoffbügeln, insbesondere von Büstenhalterbügeln geschaffen, mittels der der Kunststoffdraht zunächst unter Verwendung eines Wickelkernes in eine endlose Wendel übergeführt wird. Statt eines Wickelkernes können selbstverständlich auch äquivalente Vorrichtungen vorgesehen sein. Es ist lediglich gefordert, daß der Querschnitt des Wickelkerns an die spätere Krümmungsform der Kunststoffbügel angepaßt und dabei insbesondere exzentrisch, beispielsweise oval ist. Aus dem so gebogenen wendelförmigen Draht können dann die Windungen zur endgültigen Bildung der einzelnen Kunststoffbügel aufgeschnitten werden.

Vorzugsweise ist der Wickelkern direkt einem Extruder zur Herstellung des Kunststoffdrahtes nachgeordnet. Dies hat den Vorteil, daß der Kunststoffdraht nach dem Verlassen des Extruders noch warm ist und so problemlos in die Wendelform übergeführt werden kann.

Vorzugsweise ist dem Wickelkern eine Zuführeinrichtung in Form von zwei zueinander parallelen, frei drehbaren Rollen vorgeordnet, zwischen denen hindurch der warme Kunststoffdraht hindurchgeführt ist. Eine derartige Zuführeinrichtung hat den Vorteil, daß der warme Kunststoffdraht exakt dem Wickelkern aufgegeben wird.

Um den Kunststoffdraht exakt um den Wickelkern herum führen zu können, ist der Wickelkern in einer bevorzugten Weiterbildung mit einer umlaufenden Aufnahmenut für den Kunststoffdraht versehen. Durch eine derartige Rille ist eine optimale Führung des Kunststoffdrahtes auf dem Außenumfang des Bügelkerns möglich.

In einer Weiterbildung ist dem Wickelkern eine auf seinem Umfang ablaufende, frei drehbare Trennscheibe zwischen der Zuführposition des warmen Kunststoffdrahtes auf den Wickelkern und der Abführposition des erstarrten Kunststoffdrahtes in die Wendel zugeordnet. Dies bringt den Vorteil mit sich, daß die fertige Wendel einwandfrei von dem Kunststoffdraht absepariert wird, der noch um den Wickelkern herum verläuft.

Damit der Kunststoffdraht einwandfrei an der Mantelfläche des Wickelkerns anliegt und somit die vorgegebene Querschnittsform der Wendel ergibt, sind vorzugsweise um den Umfang des Wickelkerns herum Anpreßrollen vorgesehen. Diese sorgen dafür, daß der Kunststoffdraht an der Mantelfläche des Wickelkerns anliegt. Die Anpreßrollen sind dabei vorzugsweise federbelastet. Zum einen gewährleistet dies eine hinreichend gleichmäßige Anpreßkraft, zum anderen wird dadurch sichergestellt, daß bei einem Wickelkern mit einem exzentrischen Querschnitt die Anpreßrollen in jeder Drehposition des Wickelkerns an dessen Außenmantelfläche anliegen.

Als Kühleinrichtung sind vorzugsweise im Umfangsbereich des Wickelkerns mündende Wasserzuführungen vorgesehen. Diese sorgen während des Wickelprozesses kontinuierlich für ein schnelles Erstarren des Kunststoffs.

In einer bevorzugten Weiterbildung ist vorzugsweise an den Wickelkern stirnseitig eine längliche Walze zur Aufnahme der ge wickelten Wendel angeschlossen. Auf dieser Walze sammelt sich somit die Wendel und kann bei Bedarf abgenommen werden.

Schließlich wird in einer Weiterbildung vorgeschlagen, daß zum Aufschneiden der Windungen der Wendel wenigstens zwei zur Wendelachse parallele Schneidleistenpaare vorgesehen sind. Auf diese Weise können technisch sehr einfach die Windungen zur Bildung der endgültigen Kunststoffbügel an den entsprechenden Stellen aufgeschnitten werden.

Ein Ausführungsbeispiel einer erfindungsgemäßen Vorrichtung zum Herstellen von gekrümmten Kunststoffbügeln in Form von Büstenhalterbügeln wird nachfolgend anhand der Zeichnungen beschrieben. In diesen zeigt:

Fig. 1 eine rein schematische Seitenansicht der Vorrichtung zum Herstellen von gekrümmten Kunststoffbügeln;

Fig. 2 eine Draufsicht auf die Vorrichtung in Fig. 1;

Fig. 3 eine Axialansicht einer mittels der Vorrichtung in Fig. 1 und 2 hergestellten Wendel;

Fig. 4 eine Ansicht eines einzelnen Kunststoffbügels;

Fig. 5 ein Schnitt entlang der Linien V-V in Fig. 1, 2 und 4 in vergrößertem Maßstab.

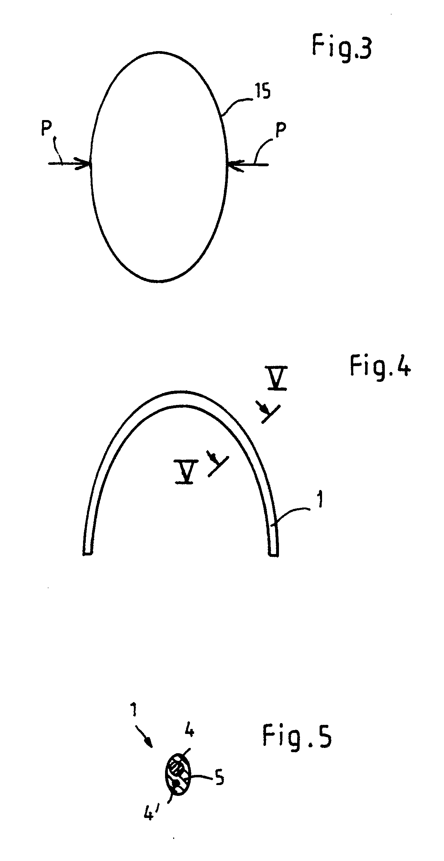

Die Vorrichtung zum Herstellen von gekrümmten Kunststoffbügeln 1 in Form von Büstenhalterbügeln besteht zunächst aus einem Extruder 2, der rein schematisch angedeutet ist. Mittels dieses Extruders 2 wird ein Kunststoffdraht 3 geschaffen, aus dem dann die Kunststoffbügel 1 hergestellt werden. Ein Querschnitt durch einen derartigen Kunststoffdraht 3 ist in Fig. 5 dargestellt. Er besteht zunächst aus zwei Kunststoffdrahtkernen 4, 4', die mittels einer Kunststoffumhüllung 5 ummantelt sind. Die beiden Kunststoffdrahtkerne 4,4' bestehen dabei jeweils aus Polyestermonofilen mit einem Durchmesser von 1,2 mm bzw. 0,7 mm, wobei der dickere Kunststoffdrahtkern 4 später in der Krümmungsaußenseite des Kunststoffbügels 1 liegt. Die Herstellung des Kunststoffdrahtes 3 im Extruder 2 erfolgt dabei dergestalt, daß die beiden Kunststoffdrahtkerne 4, 4' als Halbzeuge dem Extruder zugeführt werden, der dann die Ummantelung mit der Kunststoffumhüllung 5 durchführt.

Nach Passieren einer Zuführeinrichtung 6 in Form von zwei parallel zueinander beabstandeten, frei drehbaren Rollen 7 wird der noch warme, thermoplastische Kunststoffdraht 3 der eigentlichen Vorrichtung zum Herstellen der gekrümmten Kunststoffbügel 1 zugeführt. Diese besteht zunächst aus einem Wickelkern 8, welcher um eine Achse A mittels eines nicht dargestellten Motors in Rotation versetzt wird. Dieser Wickelkern 8 besitzt dabei eine nichtrunde Querschnittsform im wesentlichen in Form eines Exzenters oder Ovals. Die äußere Mantelfläche 9 ist dabei mit ihrem Krümmungsverhalten an die spätere Krümmung der Kunststoffbügel 1 angepaßt. Um den Umfang herum ist der Wickelkern 8 auf der Mantelfläche 9 mit einer umlaufenden Aufnahmenut 10 versehen. In dieser rillenförmigen Aufnahmenut 10 ist der vom Extruder 2 kommende warme Kunststoffdraht 3 geführt und macht dabei annähernd einen ganzen Umlauf.

Damit der Kunststoffdraht 3 eng auf der Mantelfläche 9 des Wickelkerns 8 liegt, sind dem Wickelkern 8 um dessen Umfang herum frei drehbare Anpreßrollen 11 zugeordnet, die zwischen ihrer Außenmantelfläche und der Mantelfläche 9 den Kunststoffdraht 3 festlegen. Diese Anpreßrollen 11 sind dabei in nicht dargestellter Weise derart federbelastet, daß sie die Exzenterbewegungen des nichtrunden Wickelkerns 8 mitmachen, so daß in jeder Drehposition des Wickelkerns 8 die Anpreßrollen 11 an der Mantelfläche 9 anliegen.

Weiterhin ist dem Wickelkern 8 eine Kühleinrichtung 12 zugeordnet. Diese besteht in dem dargestellten Ausführungsbeispiel aus drei Wasserzuführungen 13, die im Bereich der Mantelfläche 9 des Wickelkerns 8 münden. Durch das aus den Wasserzuführungen 13 austretende Wasser wird der Kunststoffdraht 3 abgekühlt, so daß dieser beim Umlauf um den Wickelkern 8 erstarrt und somit die Umfangsform der Mantelfläche 9 annimmt.

Stirnseitig ist an den Wickelkern 8 eine Walze 14 befestigt, welche eine entsprechende exzentrische Querschnittsform aufweist. Diese Walze 14 läuft mit dem Wickelkern 8 um und dient der Aufnahme einer Wendel 15, die durch den den Wickelkern 8 verlassenden, erstarrten Kunststoffdraht 3 gebildet wird. Dabei ist im Übergangsbereich zwischen dem Wickelkern 8 und der Walze 14 eine Trennscheibe 16 angeordnet, die frei drehbar auf der Mantelfläche 9 des Wickelkerns 8 abrollt und dabei gewährleistet, daß der erstarrte Kunststoffdraht 3 nach fast vollständigem Umlauf um den Wickelkern 8 herum einwandfrei auf die Walze 14 geleitet wird.

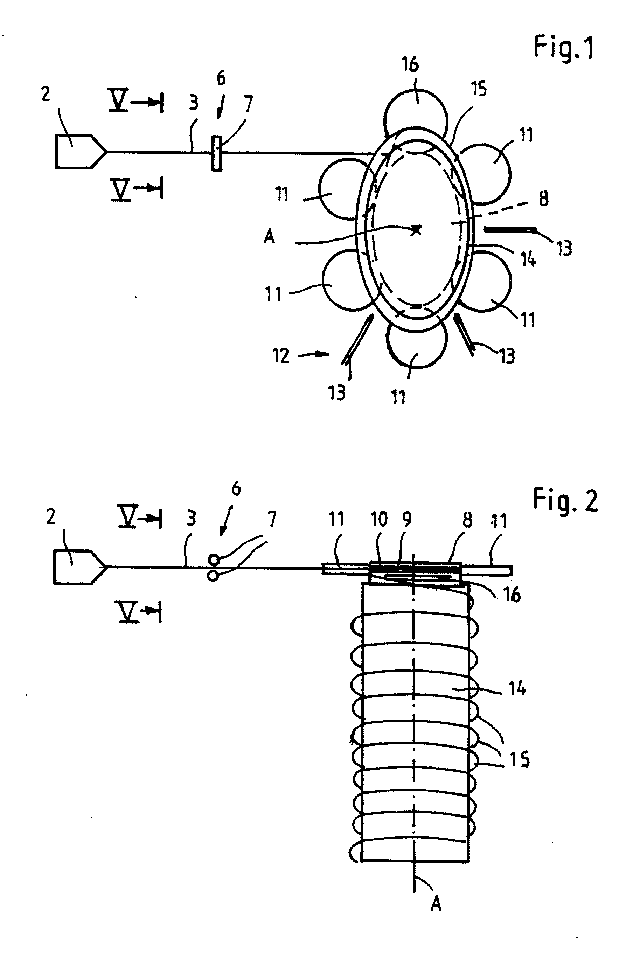

In Fig. 2 ist erkennbar, daß der Durchmesser der Walze 14 etwas kleiner ist als der Durchmesser des Wickelkerns 8. Dies trägt der Tatsache Rechnung, daß der erstarrte Kunststoffdraht 3 nach Verlassen des Wickelkerns 8 aufgrund seiner Elastizität nicht aufspringt.

Sobald die Wendel 15 eine entsprechende Länge auf der Walze 14 erreicht hat, wird der Kunststoffdraht 3 im Bereich des Wickelkerns 8 durchtrennt, so daß die Wendel 15 von der Walze 14 abgezogen werden kann. Die Wendelbildung wird dabei nicht unterbrochen, d.h. der Wickelkern 8 läuft ununterbrochen weiter. Die gebildete Wendel 15 ist in Fig. 3 schematisch angedeutet. Aus ihr können nun die Kunststoffbügel 1 gebildet werden, indem die Wendelwindungen im Bereich der Pfeile P aufgeschnitten werden. Dies kann beispielsweise durch nicht dargestellte Schneidleistenpaare erfolgen, so daß die Wendel 15 über ihre gesamte Länge aufgeschnitten wird. Ein auf dieser Weise erhaltener Kunststoffbügel 1 ist in vergrößertem Maßstab in Fig. 4 dargestellt. Dieser besitzt unter Verwendung der zuvor beschriebenen Kunststoffmaterialien ein hohes Rückstellvermögen.

Bezugszeichenliste

1 Kunststoffbügel
2 Extruder
3 Kunststoffdraht
4 Kunststoffdrahtkern
4' Kunststoffdrahtkern
5 Kunststoffumhüllung
6 Zuführeinrichtung
7 Rolle
8 Wickelkern
9 Mantelfläche
10 Aufnahmenut
11 Anpreßrolle
12 Kühleinrichtung
13 Wasserzuführung
14 Walze
15 Wendel
16 Trennscheibe
A Achse
P Pfeil

## Ansprüche

1. Verfahren zum Herstellen von gekrümmten Kunststoffbügeln, insbesondere Büstenhalterbügeln,
bei dem diese unter Verwendung von erwärmtem Kunststoff in die vorgegebene Form gebracht und anschließend zum Erstarren abgekühlt werden, **dadurch gekennzeichnet,**
daß ein endloser, thermoplastischer Kunststoffdraht im thermoplastisch verformbaren Zustand kontinuierlich in der Art einer Wendel gewickelt und dabei abgekühlt wird und daß anschließend die Windungen der so gebildeten, erstarrten Wendel zur Bildung einzelner, gekrümmter Kunststoffbügel aufgeschnitten werden.

2. Verfahren nach Anspruch 1, dadurch gekennzeichnet, daß der endlose Kunststoffdraht direkt aus einem der Herstellung des Kunststoffdrahtes dienenden Extruder abgezogen wird.

3. Verfahren nach Anspruch 1 oder 2, dadurch gekennzeichnet, daß zum Abkühlen des Kunststoffdrahtes dieser mit Wasser besprüht wird.

4. Verfahren nach einem der Ansprüche 1 bis 3, dadurch gekennzeichnet, daß als endloser Kunststoffdraht wenigstens ein Kunststoffdrahtkern, vorzugsweise zwei Kunststoffdrahtkerne verwendet werden, die von einer Kunststoffumhüllung ummantelt werden.

5. Verfahren nach Anspruch 4, dadurch gekennzeichnet, daß als Kunststoffdrahtkern Polyester verwendet wird.

6. Verfahren nach Anspruch 4 oder 5, dadurch gekennzeichnet, daß bei der Verwendung von zwei Kunststoffdrahtkernen der auf der Krümmungsaußenseite verlaufende Kunststoffdrahtkern dicker als der Kunststoffdrahtkern auf der Krümmungsinnenseite ausgebildet wird.

7. Verfahren nach einem der Ansprüche 4 bis 6, dadurch gekennzeichnet, daß als Kunststoffumhüllung Polyacetalharz oder Polykarbonat verwendet wird.

8. Vorrichtung zum Herstellen von gekrümmten Kunststoffbügeln (1), insbesondere Büstenhalterbügeln,
**gekennzeichnet durch**
einen um eine Achse (A) rotierenden Wickelkern (8), dessen mit einem an die Krümmungsform der herzustellenden Kunststoffbügel (1) angepaßten Umfangsprofil versehene Mantelfläche (9) einen endlosen, thermoplastischen Kunststoffdraht (3) im thermoplastisch verformbaren Zustand aufwickelt sowie durch eine dem Wickelkern (8) zugeordnete Kühleinrichtung (12) zum Abkühlen des Kunststoffdrahtes (3) während des Aufwickelns zum Überführen des Kunststoffdrahtes (3) in eine erstarrte Wendel (15), deren Windungen anschließend zur Bildung der einzelnen, gekrümmten Kunststoffbügel (1) aufschneidbar sind.

9. Vorrichtung nach Anspruch 8, dadurch gekennzeichnet, daß der Wickelkern (8) direkt einem Extruder (2) zum Herstellen des Kunststoffdrahtes (3) nachgeordnet ist.

10. Vorrichtung nach Anspruch 8 oder 9, dadurch gekennzeichnet, daß dem Wickelkern (8) eine Zuführeinrichtung (6) in Form von zwei zueinander parallelen, frei drehbaren Rollen (7) vorgeordnet ist, zwischen denen hindurch der warme Kunststoffdraht (3) hindurchgeführt ist.

11. Vorrichtung nach einem der Ansprüche 8 bis 10, dadurch gekennzeichnet, daß der Wickelkern (8) mit einer umlaufenden Aufnahmenut (10) für den Kunststoffdraht (3) versehen ist.

12. Vorrichtung nach einem der Ansprüche 8 bis 11, dadurch gekennzeichnet, daß dem Wickelkern (8) eine auf seinem Umfang ablaufende, frei drehbare Trennscheibe (16) zwischen der Zuführposition des warmen Kunststoffdrahtes (3) auf den Wickelkern (8) und der Abführposition des erstarrten Kunststoffdrahtes (3) in die Wendel (15) zugeordnet ist.

13. Vorrichtung nach einem der Ansprüche 8 bis 12, dadurch gekennzeichnet, daß um den Umfang des Wickelkerns (8) herum Anpreßrollen (11) vorgesehen sind.

14. Vorrichtung nach Anspruch 13, dadurch gekennzeichnet, daß die Anpreßrollen (11) federbelastet sind.

15. Vorrichtung nach einem der Ansprüche 8 bis 14, dadurch gekennzeichnet, daß als Kühleinrichtung (12) im Umfangsbereich des Wickelkerns (8) mündende Wasserzuführungen (13) vorgesehen sind.

16. Vorrichtung nach einem der Ansprüche 8 bis 15, dadurch gekennzeichnet, daß an den Wickelkern (8) stirnseitig eine längliche Walze (14) zur Aufnahme der gewickelten Wendel (15) angeschlossen ist.

17. Vorrichtung nach einem der Ansprüche 8 bis 16, dadurch gekennzeichnet, daß zum Aufschneiden der Windungen der Wendel (15) wenigstens zwei zur Wendelachse parallele Schneidleistenpaare vorgesehen sind.

Fig.1

Fig. 2

Fig.3

Fig.4

Fig.5